# EUROPÄISCHE PATENTANMELDUNG

(11) **EP 1 513 243 A2**
(43) Veröffentlichungstag der Anmeldung: **09.03.2005**
(21) Anmeldenummer: 04012827.4
(22) Anmeldetag: 29.05.2004
(51) Int. Cl.: H02K 1/17

(54) **Elektrische Maschine mit Permanentmagnetpolen**

(30) Priorität: 05.09.2003 DE 10340943
(71) Anmelder: ROBERT BOSCH GMBH, 70442 Stuttgart (DE)
(72) Erfinder: Kuenzel, Gerald, 77815 Buehl Vimbuch (DE); Roos, Gerald, 77855 Achern (DE); Baumann, Rolf, 77815 Buehl (DE); Wiesler, Martin, 76534 Baden-Baden/Neuweier (DE)

(57) **Zusammenfassung**

Elektrische Maschine (10) mit über den Innenumfang ihres Stators angeordneten, an einem weichmagnetischen Jochring (12) großflächig befestigten permanentmagnetischen Polen abwechselnder Polarität, die mit einem Rotor (16) zusammenwirken und aus flexiblem Magnetmaterial (14) bestehen. Für eine möglichst einfache Befestigung des Magnetmaterial (14) wird vorgeschlagen, durch am Jochring (12) des Stators befestigte und/oder angeformte Fixiermittel (29, 30) das Magnetmaterial (14) an seinen axialen einander gegenüberliegenden Randbereichen (14a, 14b) kraftschlüssig am Jochring (12) zu fixieren.

## Beschreibung

### Stand der Technik

Die Erfindung betrifft eine elektrische Maschine mit über den Innenumfang ihres Stators angeordneten permanentmagnetischen Polen nach der Gattung des Anspruchs 1.

Bei elektrischen Maschinen dieser Art, insbesondere bei mit Gleichstrom betriebenen Elektromotoren in Kraftfahrzeugen ist es bekannt, das permanentmagnetische Material für die Pole des Stators als flexiblen Bandabschnitt herzustellen und am Innenumfang eines metallischen Jochringes des Stators großflächig zu verkleben. Die radial einmagnetisierten Pole des so gebildeten Polringes wirken über einen sogenannten Arbeitsluftspalt mit einem Kommutatorläufer zusammen, der über Kohlebürsten mit Gleichstrom versorgt wird. Der metallische Jochring dient dabei als Gehäuse sowie als magnetischer Rückschluss des Stators.

Während bei Kleinmotoren die permanentmagnetischen Pole in dem am Innenumfang des Jochringes festgeklebten bandförmigen Magnetmaterials einmagnetisiert werden, ist es bei Elektromotoren größerer Leistung, wie zum Beispiel bei Startermotoren bekannt, die permanentmagnetischen Pole auch einzeln am Innenumfang des Jochringes mittels Schrauben oder Nieten zu befestigen.

Das vorerwähnte Klebeverfahren ist bei der Herstellung der Elektromotoren nicht nur umweltbelastend, sondern erfordert auch erhebliche Anlageinvestitionen. Nachteilig beim Verschrauben oder Vernieten der Magnetpole sind die dabei erforderlichen zusätzlichen Befestigungselemente und die spanabhebende Bearbeitung der miteinander zu verbindenden Teile.

Mit der vorliegenden Lösung wird angestrebt, die Befestigung der Permanentmagnete am Innenumfang des Jochringes ohne Klebeverbindung oder zusätzliche Befestigungselemente möglichst einfach zu realisieren.

### Vorteile der Erfindung

Durch das kennzeichnende Merkmal des Anspruchs 1 ergibt sich der Vorteil, dass das Magnetmaterial für die Statorpole mit den ohnehin vorhandenen Teilen der elektrischen Maschine kraftschlüssig am Jochring fixiert wird. Ein weiterer Vorteil besteht darin, dass mit Hilfe der Fixiermittel neben der Haltefunktion auch ein Toleranzausgleich der Dicke und Länge des Magnetmaterials sowie des Rückschlussringes in axialer Richtung erzielt wird.

Durch die in den Unteransprüchen aufgeführten Maßnahmen ergeben sich vorteilhafte Ausgestaltungen und Weiterbildungen der in den Hauptansprüchen angegebenen Merkmale.

So wird in zweckmäßiger Weise das Magnetmaterial als Bandabschnitt auf der Innenseite des als Jochring dienenden metallischen Rückschlussringes durch beidseitig an seinen Stirnseiten angreifende Fixiermittel mit seinem Außenumfang gegen den Rückschlussring gepresst und gleichzeitig axial zentriert. Eine einfach herzustellende und zuverlässige Befestigung des Magnetmaterials lässt sich dadurch erzielen, dass zumindest an mehreren Bereichen des Bandabschnitts die am Rückschlussring befestigten und/oder angeformten Fixiermittel in einem Winkel von < 90° zu den Polflächen des Magnetmaterials an der Innenkante von mindestens einer der beiden Stirnseiten des Magnetmateriales kraftschlüssig anliegen. Eine zweckmäßige Ausgestaltung wird dadurch erreicht, dass der Rückschlussring auf mindestens einer Stirnseite mehrere über den Umfang verteilt freigestanzte Laschen aufweist, welche als Fixiermittel in einem Winkel von >90° und <180° radial nach innen gebogen sind und mit ihrem Endabschnitt an der Innenkante der Stirnseite des Magnetmaterials anliegen. Zur Befestigung des Magnetmaterials lässt sich auch der Lagerflansch der elektrischen Maschine verwenden, indem der an einer Stirnseite des Rückschlussringes befestigte Lagerflansch mehrere über den Umfang verteilte Laschen aufweist, die radial nach innen gerichtet freigestanzt und in einem Winkel von >45° und <90° axial nach innen gebogen sind und mit ihrem Endabschnitt an der Innenkante der Stirnseite des Magnetmaterials anliegen. Eine vereinfachte Ausführung der Befestigung des Magnetmaterials durch einen Lagerflansch ergibt sich dadurch, dass die radial nach innen gerichteten Laschen soweit verkürzt sind, dass sie mit ihren Enden an der Stirnseite des Magnetmaterials anliegen. Eine besonders gleichmäßige Befestigung des Magnetmaterials mittels eines Lagerflansches lässt sich dadurch realisieren, dass als Fixiermittel am Lagerflansch eine ringförmig umlaufende Rinne V-förmig von außen axial nach innen gerichtet ist und dabei mit ihrer radial äußeren Wandung an der Innenkante der Stirnseite des Magnetmaterials anliegt. Eine besonders kostengünstige Ausführung besteht darin, dass der Lagerflansch mit dem Rückschlussring einteilig, insbesondere durch Tiefziehen hergestellt ist. Anstelle der Laschen oder der umlaufenden Rinne als Fixiermittel des Lagerflansches ist es ebenso möglich, am Lagerflansch mehrere über den Umfang verteilte, axial nach innen geprägte Zapfen, vorzugsweise konisch verjüngend anzubringen, die an der Innenkante der Stirnseite des Magnetmaterials anliegen. Bei elektrischen Maschinen mit einem Kommutator lassen sich die Fixiermittel ebensogut an einer stirnseitig am Jochring befestigten Bürstenhalterplatte anbringen, wobei dann ein umlaufender, vorzugsweise in mehrere Segmente aufgeteilter, axial nach innen vorstehender Steg an der Bürstenhalterplatte angeformt ist, dessen sich konisch verjüngende äußere Wandung an der Innenkante der Stirnseite des Magnetmaterials anliegt.

### Zeichnung

Die Erfindung wird im Folgenden beispielhaft anhand der Figuren näher erläutert. Es zeigen
Figur 1, die obere Hälfte eines Elektromotors mit Fixiermitteln des Magnetmaterials in der Draufsicht,
Figur 2, den Elektromotor aus Figur 1 im Längsschnitt als erstes Ausführungsbeispiel,
Figur 3 bis 6 zeigen verschiedene Ausführungsbeispiele der Fixiermittel für das Magnetmaterial am Stator.

### Beschreibung der Ausführungsbeispiele

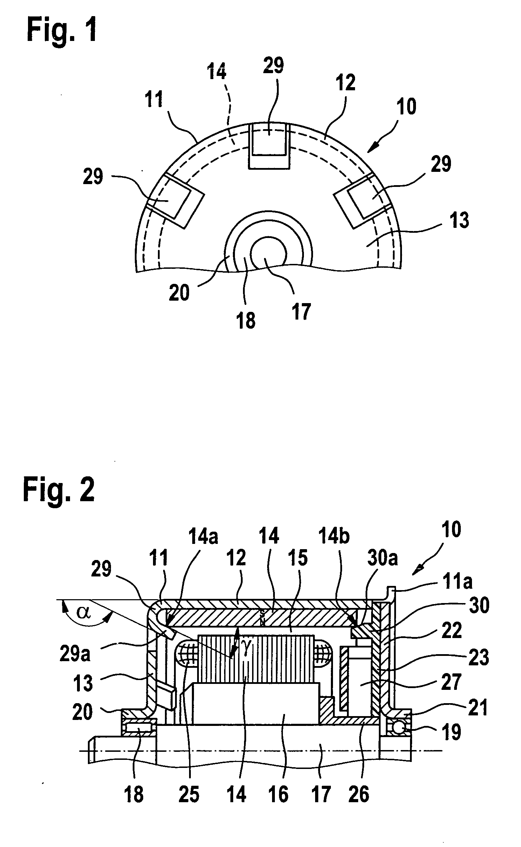

In Figur 1 und 2 ist die obere Hälfte einer mit 10 bezeichneten elektrischen Maschine dargestellt, deren weichmagnetisches Gehäuse 11 topfförmig ausgebildet und durch Tiefziehen hergestellt ist. Der zylindrische Teil des Gehäuses 11 bildet einen Jochring 12 und der Gehäuseboden bildet einer Lagerflansch 13. Am Innenumfang des Jochringes 12 ist ein Bandabschnitt eines mehrere Millimeter dicken Magnetmaterials 14 großflächig befestigt, in dem permanentmagnetische Pole abwechselnder Polarität radial einmagnetisiert sind. Am Innenumfang des Magnetmaterials 14 stehen die Pole über einen sogenannten Arbeitsluftspalt 15 mit einem Rotor 16 in Wirkverbindung. Der Rotor 16 ist mit seiner Antriebswelle 17 beidseitig über je ein Lager 18, 19 in einer Nabe 20, 21 der Lagerflansche 13, 22 aufgenommen, wobei der hintere Lagerflansch 22 in Form eines Deckels am Rand 11a des topfförmigen Gehäuses 11 gemeinsam mit einer Bürstenhalterplatte 23 befestigt ist. Der Rotor 16 trägt in seinem Blechpaket 24 eine Wicklung 25, deren Spulen über einen Kommutator 26 am hinteren Endabschnitt der Antriebswelle 17 mittels Kohlebürsten 27 mit Gleichstrom zu versorgen sind.

Der Jochring 12 des aus Stahlblech hergestellten Gehäuses 11 bildet einen magnetischen Rückschluss für die Pole des flexiblen Magnetmaterials 14, welches zunächst als Bandabschnitt zu einem Ring gebogen in das Gehäuse 11 eingeschoben wird. Um dieses Magnetmaterial 14 am Jochring 12 zuverlässig zu fixieren, sind im ersten Ausführungsbeispiel nach Figur 1 und 2 an der linken Stirnseite des Jochrings 12 sechs über den Umfang verteilte, Laschen 29 freigestanzt, die aus der axialen Erstreckung heraus als Fixiermittel um einen Winkel α von etwa 150° radial nach innen gebogen sind. Die Laschen 29 sind dabei in ihrer Länge so bemessen, dass ihr Endabschnitt 29a an der Innenkante 14a der vorderen Stirnseite des Magnetmaterials 14 in einem Anstellwinkel γ von etwa 30° zu deren Polflächen anliegen. Desweiteren ist zur Befestigung des Magnetmaterials 14 an der Bürstenhalterplatte 23 ein umlaufender, axial nach innen vorstehender Steg 30 angeformt, der in mehrere, nicht näher dargestellte Segmente unterteilt ist und dessen äußere Wandung 30a sich konisch verjüngt. Mit dem Einsetzen der Bürstenhalterplatte 23 in die hintere Gehäuseöffnung wird der Steg 30 mit der konischen Wandung 30a gegen die Innenkante 14b der hinteren Stirnseite des Magnetmaterials 14 angelegt und sodann das Magnetmaterial 14 von den Laschen 29 und dem Steg 30 kraftschlüssig gegen die Innenwand des Jochrings 12 gedrückt. Dabei wird das Magnetmaterial 14 gleichzeitig unter Ausgleich der Fertigungstoleranzen axial zentriert.

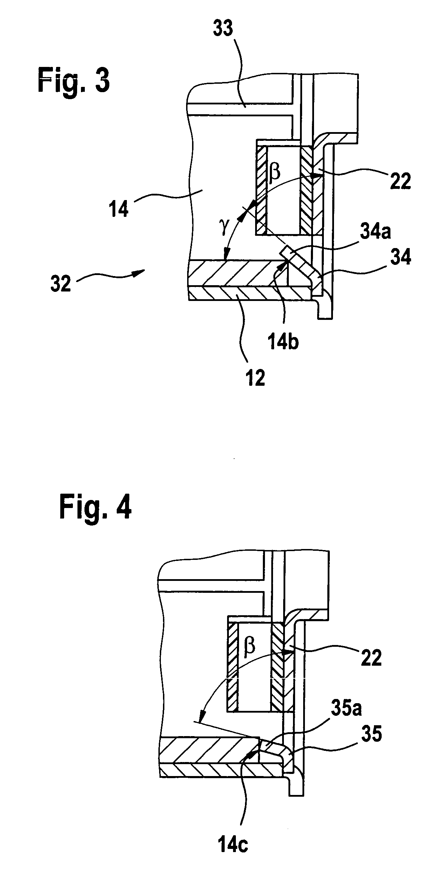

Figur 3 zeigt in einem weiteren Ausführungsbeispiel einen Ausbruch vom hinteren Ende der unteren Hälfte des Stators 32 einer elektrischen Maschine im Querschnitt. Dort ist auch die Stoßstelle 33 vom Bandabschnitt des Magnetmaterials 14 erkennbar. Alternativ zu dem in Figur 2 dargestellten Steg 30 an der Bürstenhalterplatte 23 sind hier bei dem an der hinteren Stirnseite des Jochringes 12 befestigten Lagerflansch 22 mehrere über den Umfang verteilte Laschen 34 als Fixiermittel radial nach innen gerichtet freigestanzt. Sie sind in einem Anstellwinkel β von etwa 50° axial nach innen gebogen, so dass sie mit ihrem Endabschnitt 34a an der Innenkante 14b der hinteren Stirnseite des Magnetmaterials 14 mit einem Anstellwinkel γ von etwa 40° kraftschlüssig anliegen.

In Figur 4 ist in einem gleichen Ausbruch der elektrischen Maschine als drittes Ausführungsbeispiel der hintere Lagerflansch 22 mit mehreren radial nach innen gerichtet freigestanzten Laschen 35 versehen, die etwas kürzer als die Laschen 34 aus Figur 3 sind und außerdem in einem etwas größeren Anstellwinkel β von etwa 70° axial nach innen gebogen sind. Sie liegen mit ihren Enden 35a an der hinteren Stirnseite 14c des Magnetmaterials 14 an und dienen dabei im wesentlichen zur axialen Fixierung des Magnetmaterials 14.

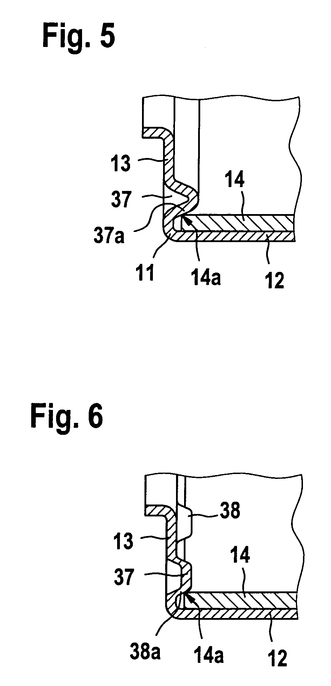

Figur 5 zeigt in einem weiteren Ausführungsbeispiel einen Ausbruch der vorderen unteren Hälfte der elektrischen Maschine im Längsschnitt. Dort ist alternativ zu den Laschen 29 in Figur 2 an dem vorderen Lagerflansch 13 als Fixiermittel für den Bandabschnitt des Magnetmaterials 14 eine ringförmig umlaufende Rinne 37 beim Tiefziehen des Gehäuses 11 herausgebildet, die einen V-förmigen, von außen axial nach innen gerichteten Querschnitt hat und dabei mit ihrer radial äußeren Wandung 37a an der Innenkante 14a der vorderen Stirnseite des Magnetmaterials 14 anliegt.

Alternativ zur Rinne 37 aus Figur 5 sind in dem letzten Ausführungsbeispiel nach Figur 6 bei dem an der vorderen Stirnseite des Jochrings 12 ausgebildeten Lagerflansch 13 mehrere über den Umfang verteilte, axial nach innen geprägte Zapfen 38 vorgesehen, die ebenfalls mit dem Tiefziehvorgang des Gehäuses 11 der elektrischen Maschine durch Fließpressen hergestellt werden. Die konisch sich verjüngenden Zapfen 38 sind axial nach innen gerichtet und liegen mit ihrer Außenwandung 38a jeweils an der Innenkante 14a der vorderen Stirnseite des Magnetmaterials 14 an.

## Patentansprüche

1. Elektrische Maschine (10) mit über den Innenumfang ihres Stators angeordneten, an einem weichmagnetischen Jochring (12) großflächig befestigten permanentmagnetischen Polen abwechselnder Polarität, die über einen Arbeitsluftspalt (15) mit einem Rotor (16) zusammenwirken und aus einem flexiblen Magnetmaterial (14) bestehen, **dadurch gekennzeichnet, dass** das Magnetmaterial (14) an seinen axialen, einander gegenüberliegenden Randbereichen (14a, 14b) durch am Jochring (12) des Stators (32) befestigte und/oder angeformte Fixiermittel (29, 30, 34, 35, 37, 38) kraftschlüssig am Jochring (12) fixiert ist.

2. Elektrische Maschine nach Anspruch 1 , **dadurch gekennzeichnet, dass** das Magnetmaterial (14) als Bandabschnitt auf der Innenseite eines als magnetischen Rückschluss dienenden Jochringes (12) durch beidseitig an den Stirnseiten des Magnetmaterials (14) angreifende Fixiermittel (29, 30, 34, 35, 37, 38) axial zentriert und mit seinem Außenumfang gegen den Jochring (12) gepresst ist.

3. Elektrische Maschine nach Anspruch 2, **dadurch gekennzeichnet, dass** zumindest an mehreren Bereichen des Bandabschnittes die am Jochring (12) befestigten und/oder angeformten Fixiermittel (29, 30, 34, 35, 37, 38) in einem Winkel (γ) von < 90° zu den Polflächen des Magnetmaterials (14) an der Innenkante (14a, 14b) von mindestens einer der beiden Stirnseiten des Magnetmaterials (14) kraftschlüssig anliegen.

4. Elektrische Maschine nach Anspruch 3, **dadurch gekennzeichnet, dass** der Jochring (12) auf mindestens einer Stirnseite mehrere über den Umfang verteilte, freigestanzte Laschen (29) aufweist, welche als Fixiermittel in einem Winkel (α) von >90° und <180° radial nach innen gebogen sind und mit ihrem Endabschnitt (29a) an der Innenkante (14a) der Stirnseite des Magnetmaterials (14) anliegen.

5. Elektrische Maschine nach Anspruch 3 oder 4, **dadurch gekennzeichnet, dass** bei einem an einer Stirnseite des Jochrings (12) befestigten Lagerflansch (22) mehrere über den Umfang verteilte Laschen (34) radial nach innen gerichtet freigestanzt und in einem Winkel (β) von >45° und <90° axial nach innen gebogen sind und mit ihrem Endabschnitt (34a) an der Innenkante (14b) der Stirnseite des Magnetmaterials (14) anliegen.

6. Elektrische Maschine nach Anspruch 3, 4 oder 5, **dadurch gekennzeichnet, dass** bei einem an der Stirnseite des Jochringes (12) befestigten Lagerflansch (22) mehrere über den Umfang verteilte Laschen (35) radial nach innen gerichtet freigestanzt und in einem Winkel (β) von >45° und <90° axial nach innen gebogen sind und mit ihren Enden (35a) an der Stirnseite (14c) des Magnetmaterials (14) anliegen.

7. Elektrische Maschine nach einem der Ansprüche 3 bis 7, **dadurch gekennzeichnet, dass** bei einem an einer Stirnseite des Jochrings (12) angeordneten Lagerflansch (13) als Fixiermittel eine ringförmig umlaufende Rinne (37) mit V-förmigen Querschnitt von außen axial nach innen gerichtet ist und dabei mit ihrer radial äußeren Wandung (37a) an der Innenkante (14a) der Stirnseite des Magnetmaterials (14) anliegt.

8. Elektrische Maschine nach einem der Ansprüche 4 bis 7, **dadurch gekennzeichnet, dass** der Lagerflansch (13) mit dem Jochring (12) einteilig, insbesondere durch Tiefziehen, hergestellt ist.

9. Elektrische Maschine nach einem der Ansprüche 1 bis 4, **dadurch gekennzeichnet, dass** bei einem an einer Stirnseite des Jochringes (12) angeordneten Lagerflansch (13) mehrere über den Umfang verteilte,von außen axial nach innen geprägte Zapfen (38), vorzugsweise konisch verjüngend, an der Innenkante (14a) der Stirnseite des Magnetmaterials (14) anliegen.

10. Elektrische Maschine nach einem der vorherigen Ansprüche, **dadurch gekennzeichnet, dass** an einer an einer Stirnseite des Jochrings (12) befestigten Bürstenhalterplatte (23) ein umlaufender, vorzugsweise in mehrere Segmente aufgeteilter, axial nach innen vorstehender Steg (30) angeformt ist, dessen sich konisch verjüngende äußere Wandung (30a) an der Innenkante (14b) der Stirnseite des Magnetmaterials (14) anliegt.
